# EUROPÄISCHE PATENTSCHRIFT

(11) **EP 2 815 138 B1**
(45) Veröffentlichungstag und Bekanntmachung des Hinweises auf die Patenterteilung: **15.07.2015**
(21) Anmeldenummer: 13704746.0
(22) Anmeldetag: 06.02.2013
(51) Int. Cl.: F16B 5/02, F16B 25/00, F16B 25/10

(54) **SCHRAUBE UND DAMIT HERGESTELLTE DÜNNBLECHVERBINDUNG**
SCREW AND THIN METAL SHEET CONNECTION PRODUCED THEREWITH
VIS ET ASSEMBLAGE DE TÔLE MINCE RÉALISÉ AVEC CELLE-CI

(30) Priorität: 17.02.2012 DE 102012101320
(43) Veröffentlichungstag der Anmeldung: 24.12.2014
(73) Patentinhaber: SFS Intec Holding AG, 9435 Heerbrugg (CH)
(72) Erfinder: MAIR, Roland, A-6840 Götzis (AT); DUTLER, René, CH-9453 Eichberg (CH)
(86) Internationale Anmeldenummer: PCT/EP2013/052256
(87) Internationale Veröffentlichungsnummer: WO 2013/120738

(56) Entgegenhaltungen:
- WO-A1-01/42669
- DE-A1- 19 651 838
- DE-U1- 20 121 563
- DE-U1- 29 607 265

## Beschreibung

Die Erfindung betrifft eine Verbindung eines einen Unterbau bildenden dünnen Bleches durch eine Schraube mit einem Bauteil aus Kunststoff mit einer Durchgangsbohrung und mit einer zwischen dem Unterbau und dem Bauteil liegenden Dichtung. Die Schraube ist mit einem Schaft mit einem gewindeschneidenden oder -furchenden Gewinde und einer als ein Bohrteil und/oder als eine Eindringspitze ausgebildeten Spitze, mit einem der Spitze benachbarten unteren Gewindeabschnitt mit einem ersten Gewindeaußendurchmesser, mit einem zu der Spitze entgegen gesetzten oberen Gewindeabschnitt mit einem zweiten, größeren Gewindeaußendurchmesser und mit einem Übergangsabschnitt mit einem sich allmählich verändernden Durchmesser zwischen den beiden Gewindeabschnitten.

Eine Schraube der vorgenannten Art ist aus dem Dokument DE 10 2008 045 412 A1 bekannt. Aus diesem Dokument ist auch eine Verbindung bekannt, die im Wesentlichen der vorgenannten Verbindung entspricht. Allerdings ist bei der bekannten Verbindung eine konische Dichtscheibe zwischen dem Schraubenkopf und dem Bauteil angeordnet und der obere Gewindeabschnitt ist zusätzlich mit einem Dichtmittel beschichtet. Zwischen dem Bauteil und dem Unterbau liegt ein Dichtprofil.

Die bekannte Schraube verbindet ein Profil, das eine Schwelle, ein Türrahmen- oder Fensterrahmenteil ist, mit einer Außenwand in einer Öffnung an einem Gebäude. Der obere Gewindeabschnitt der Schraube ist mit dem Dichtmittel beschichtet. Die Dichtscheibe liegt auf dem Profil abdichtend auf. Das Dichtmittel füllt jedweden Raum zwischen dem Stützgewinde und einem Innengewinde der Bohrung des Profils aus und dichtet ihn ab. Der obere Gewindeabschnitt dient als ein Stützgewinde. Der Gewindeeingriff zwischen dem Stützgewinde und dem Profil verhindert eine Relativbewegung zwischen dem Profil und der Schraube. Eine Abdichtung ist zwischen dieser Schraube und dem Profil nur erzielbar, weil beide genau aufeinander abgestimmt sind. Eine solche Abdichtung wäre nicht ohne weiteres erzielbar, wenn die Schraube zur Befestigung von Photovoltaikelementen auf Trapezblech auf einem Dach eingesetzt werden würde. Der obere Gewindeabschnitt mit einem größeren Gewindeaußendurchmesser wäre in diesem Fall eher störend. Außerdem wäre eine konische Dichtscheibe nur einsetzbar, wenn die Schraube einen Kopf aufweist, was nicht unbedingt immer der Fall ist, und üblicherweise werden zwischen dem Trapezblech und den Photovoltaikelementen Halteelemente eingesetzt, häufig aus Kunststoff, in deren Bereich eine Abdichtung ohnehin nur mit Schwierigkeiten erreichbar wäre. Wenn Schrauben ohne Kopf eingesetzt werden, stellt sich im Übrigen das Problem, dass der untere Gewindeabschnitt in dem Trapezblech überdreht werden kann.

Aus dem Dokument DE 10 2006 041 860 A1 ist bereits eine Schraube mit einem Schaft und einem Kopf zum Befestigen eines Bauteils auf einer Unterkonstruktion unter dichtem Anpressen einer konischen Dichtscheibe an das Bauteil bekannt. In diesem Fall ist der Schraubenkopf an seiner Unterseite um den Schaft als ein Konus ausgebildet. Der Konuswinkel der konischen Dichtscheibe ist gleich dem oder größer als der Konuswinkel des Schraubenkopfes. Durch die konische Ausbildung der Unterseite des Schraubenkopfes wird das sogenannte "Schüsseln" der Dichtscheibe bei dem Anziehen der Schraube vermieden. Solche Schrauben werden bevorzugt für die Montage von Stahlprofiltafeln für Dach-, Wand- und Deckenkonstruktionen eingesetzt. Die Dichtscheiben bestehen üblicherweise aus einem Metallrücken, auf den eine Elastomerschicht aus EPDM untrennbar aufvulkanisiert ist. Für Dünnblechverbindungen, wie sie bei Trapezblech herzustellen sind, ist eine solche Schraube wegen der hohen Kraft, mit der sie angezogen werden muss, weniger geeignet. Die Gefahr, dass das Gewinde im Trapezblech überdreht, wäre zu groß.

Aus dem Dokument WO 02/40803 A1 sind eine Vorrichtung und ein Verfahren zum Befestigen einer Dachabdichtungsbahn bekannt. Zusammen mit der Schraube kommt ein Halteelement zum Einsatz, in das ein oberer Gewindeabschnitt eingedreht wird. Die Schraube hat einen unteren Gewindeabschnitt kleineren Durchmessers, der in eine Dachunterkonstruktion eingeschraubt wird. Die so hergestellte Verbindung ist aufwendig, weil ein speziell ausgebildetes Halteelement erforderlich ist. Zum Erzielen einer vollständigen Abdichtung wird nach dem Setzen der Schraube eine Flüssigfolie in eine Aufweitung zwischen dem Halteelement und dem Schraubenkopf eingegossen. Für einen Einsatz im Photovoltaikbereich ist eine solche Schraubverbindung daher ebenfalls weniger geeignet.

Aus dem Dokument EP 1 015 774 B1 ist eine Befestigung von Latten aus Holz auf einem u. a. aus Holz bestehenden Dach- oder Wandunterbau bekannt. Die bei dieser Befestigung eingesetzte Schraube hat an ihrem Schaft an die Bohrspitze und an den Kopf anschließend jeweils einen Gewindeabschnitt. Diese beiden Gewindeabschnitte weisen den gleichen Außendurchmesser auf. Damit sich Latten aus Holz stark angepresst anliegend auf einem aus Holz bestehenden Dach- oder Wandunterbau befestigen lassen, weist der an den Kopf anschließende Gewindeabschnitt eine Gewindesteigung auf, welche kleiner ist als die Gewindesteigung des an die Bohrspitze anschließenden Gewindeabschnittes. Der Kopf der Schraube ist klein und einsenkbar ausgeführt. Abdichtungsüberlegungen spielen in diesem Zusammenhang keine Rolle. Es geht um ein gegenseitig starkes Anpressen zwischen Latte und Unterbau, durch das kleinere, von der Luftfeuchtigkeit abhängige Größenänderungen im Bereich der Latte und ebenfalls im Bereich des Unterbaus abgefangen werden können.

Aus dem Dokument DE 201 21 563 U1 ist eine Schraube bekannt zum Befestigen einer Schalungsplatte an einem metallischen Schalungsträger, mit einem mit Gewinde versehenen Schaft, der dafür vorgesehen ist, die Schalungsplatte zu durchdringen und mit dem Schalungsträger in Gewindeeingriff zu kommen, wobei die Schraube mit einem Bohrteil versehen ist, im Bereich des Bohrteils eine verlorene Einrichtung vorgesehen ist zum Aufweiten einer durch den Bohrteil in der Schalungsplatte hergestellten Bohrung und der mit Gewinde versehene Schaft ein Angriffsende für ein Eindrehwerkzeug und benachbart zu dem Angriffsende einen Gewindeteil aufweist, der einen größeren Durchmesser als der übrige Gewindeteil hat. Der Gewindeteil größeren Durchmessers hat eine kleinere Steigung als der übrige Gewindeteil. Bei dem Befestigen einer Schalungsplatte ergibt sich eine Verbindung, bei der es auf eine Abdichtung zwischen Schraube und Schalungsplatte nicht ankommt. Diese bekannte Schraube ist auch nur dann einsetzbar, wenn, wie im vorliegenden Fall, ein Unterbau genügend Widerstand bietet, um die Bohrflügel, aus denen die verlorene Einrichtung besteht, abzuscheren. Zum Herstellen einer Dünnblechverbindung wäre daher die bekannte Schraube nur beschränkt geeignet.

Die gattungsbildende DE 296 07 265 U1 zeigt eine Schraube zur Befestigung einer Konterlattung an mit einer Dachschalung abgedeckten Sparren unter Zwischenschaltung von Isolierbahnen oder Isolierplatten, wobei die Schraube aus einem als Senkkopf ausgebildeten Schraubenkopf und einem langen Schaft mit einem am anderen Ende ausgebildeten Bohrteil. Der Schraubenkopf hat an seiner zum Schaft hin weisenden, annähernd kegelstumpfförmig ausgebildeten Begrenzung mehrere, radial über die Oberfläche derselben vorstehenden Fräsrippen. Der Schaft besteht aus einem ersten Gewindeabschnitt und einem zweiten Gewindeabschnitt sowie einem dazwischenliegenden gewindefreien Schaftabschnitt und einer dem Schraubenkopf gegenüberliegenden Einschraubspitze. Dabei ist die Gewindesteigung im Bereich des oberen Gewindeabschnitts kleiner als die Gewindesteigung im Bereich des unteren Gewindeabschnitts.

Aufgabe der Erfindung ist es, eine Verbindung der eingangs genannten Art so auszubilden, dass eine Überdrehsicherheit der Schraube in der Verbindung gewährleistet und eine vollkommene Abdichtung einer solchen Verbindung auf einfachere Weise erzielt werden kann.

Diese Aufgabe ist ausgehend von einer Verbindung der eingangs genannten Art mit einer Verbindung nach Anspruch 1 gelöst, mit einer Schraube bei der der obere Gewindeabschnitt der Schraube eine Gewindesteigung aufweist, die kleiner ist als Gewindesteigung des unteren Gewindeabschnittes.

Diese Aufgabe ist ausgehend von einer Verbindung der eingangs genannten Art ferner dadurch gelöst, dass die Verbindung mit einer Schraube nach der Erfindung hergestellt ist als eine dichte Verbindung durch eine Kombination aus einer Abdichtung durch definierte Komprimierung der Dichtung und einer Abdichtung durch Formschluss zwischen dem oberen Gewindeabschnitt der Schraube und dem Bauteil und einem Verdichten des Materials des Bauteils um den oberen Gewindeabschnitt.

Mit der Verbindung mit der Schraube nach der Erfindung wird die Abdichtung ohne Dichtmittel oder Dichtscheibe zwischen der Schraube und dem Bauteil durch Herstellen von Formschluss mit Hilfe der Gewindeabschnitte unterschiedlicher Gewindesteigung erzielt, ohne dass zwischen der Schraube und dem Bauteil eine Dichtscheibe und/oder ein Dichtmittel eingesetzt wird. Wenn der obere Gewindeabschnitt der Schraube nach der Erfindung in eine vorhandene Bohrung, z. B. in ein durch das Setzen der Schraube selbst vorhandenes Kernloch eines Bauteils gedreht wird, entsteht ein Formschluss, weil anschließend das Material des Bauteils dichtend um das Gewinde des oberen Gewindeabschnittes liegt. Das Doppelgewinde mit unterschiedlicher Steigung bei der Schraube nach der Erfindung ermöglicht eine exakte Komprimierung der zwischen dem Unterbau und dem Bauteil liegenden Dichtung. Da die Gewindesteigungen so ausgelegt sind, dass die des oberen Gewindeabschnittes kleiner ist als die des unteren Gewindeabschnittes, wird nämlich bei dem Setzen der Schraube das obere Bauteil an den Unterbau herangezogen. Die zwischen denselben liegende Dichtung wird dadurch definiert komprimiert. Dieses definierte Komprimieren ergibt in Kombination mit dem Formschluss zwischen dem oberen Gewindeabschnitt der Schraube und dem verdichteten und damit abdichtend um das Gewinde des oberen Gewindeabschnittes liegenden Material des Bauteils die erfindungsgemäße Abdichtung ohne Dichtmittel oder Dichtscheibe zwischen der Schraube und dem Bauteil. Bei der Befestigung von Photovoltaikelementen auf Trapezblech soll eine auf das Trapezblech aufgeklebte Dichtung definiert komprimiert werden. Die Verbindung ist nämlich der Witterung ausgesetzt und muss wasserdicht sein. Diese Dichtigkeit wird durch den Einsatz der erfindungsgemäßen Schraube bei der erfindungsgemäßen Verbindung erreicht. Wenn eine erfindungsgemäße Verbindung ohne eine zwischen Bauteil und Unterbau liegende Dichtung hergestellt ist, ist auf jeden Fall die Abdichtung zwischen der Schraube und dem Bauteil vorhanden auf Grund des Formschlusses zwischen dem Gewinde des oberen Gewindeabschnittes und der um diesen Gewindeabschnitt durch dessen kleinere Gewindesteigung erzielten Verdichtung des Materials des Bauteils.

Vorteilhafte Ausgestaltungen der Verbindung mit der Schraube nach der Erfindung bilden die Gegenstände der abhängigen Ansprüche.

In einer Ausgestaltung der Verbindung mit der Schraube nach der Erfindung ist der Übergangsabschnitt mit einem Gewindeanfang des oberen Gewindeabschnittes ausgebildet. Somit ist ein zwar abgestufter, aber durchgehender Übergang zwischen dem unteren Gewindeabschnitt und dem oberen Gewindeabschnitt vorhanden, der das Setzen der Schraube erleichtert, wenn in einem zu befestigenden Bauteil statt einer Bohrung lediglich ein durch den Bohrteil der Schraube hergestelltes Kernloch zur Aufnahme des mit dem oberen Gewindeabschnitt versehenen Teils des Schaftes zur Verfügung steht.

In einer weiteren Ausgestaltung der Verbindung mit der Schraube nach der Erfindung ist der Übergangsabschnitt gewindefrei ausgebildet. Diese Ausgestaltung der Schraube eignet sich zum Befestigen eines Bauteils, das mit einer Durchgangsbohrung zur Aufnahme der Schraube versehen ist, wobei die Durchgangsbohrung zweckmäßig einen Durchmesser hat, der dem Außendurchmesser des unteren Gewindeabschnittes entspricht oder etwas kleiner als der Außendurchmesser ist.

In einer weiteren Ausgestaltung der Verbindung mit der Schraube nach der Erfindung ist ein sich an den Übergangsabschnitt in Richtung der Spitze anschließender Teil des Schaftes gewindefrei ausgebildet. Durch die Wahl der Länge dieses gewindefreien Schaftabschnittes lässt sich gewährleisten, dass bei gesetzter Schraube der obere Gewindeabschnitt nur mit dem zu befestigenden Bauteil und der untere Gewindeabschnitt nur mit einem Unterbau, z. B. Trapezblech, und ggf. einer auf dem Unterbau befindlichen Dichtung in Gewindeeingriff ist.

In einer weiteren Ausgestaltung der Verbindung mit der Schraube nach der Erfindung steht die Gewindesteigung des unteren Gewindeabschnittes zu der Gewindesteigung des oberen Gewindeabschnittes in einem Verhältnissen von 1,1 - 1,5. Das gewährleistet bei gesetzter Schraube das erwünschte Anpressen des Bauteils an einen Unterbau und die abdichtende Einformung des oberen Gewindeabschnittes in das Bauteil.

In einer weiteren Ausgestaltung der Verbindung mit der Schraube nach der Erfindung sind an dem Übergangsabschnitt Elemente zum Aufweiten eines mit der Spitze gebohrten Kernloches und/oder Erwärmen eines das Kernloch umgebenden Werkstoffes vorhanden. Diese Ausgestaltung der Schraube erleichtert sowohl das Setzen der Schraube als auch das Erzielen einer abdichtenden Einformung des Schaftabschnittes mit dem oberen Gewindeabschnitt in dem zu befestigenden Bauteil.

In einer weiteren Ausgestaltung der Verbindung mit der Schraube nach der Erfindung ist der Schaft an einem zu der Spitze entgegengesetztem Ende mit einem Kopf und/oder einem Werkzeugangriff versehen. Der Kopf erleichtert das Verhindern eines Überdrehens der Schraube. Der Werkzeugangriff erleichtert das Setzen der Schraube.

In einer weiteren Ausgestaltung der Verbindung mit der Schraube nach der Erfindung ist der Kopf mit einem flachen Teller ausgebildet. Der Teller wirkt wie ein Bund am Kopf der Schraube und dient als ein Anschlag für den oberen Gewindeabschnitt. Somit ist noch sicherer gewährleistet, dass der untere Gewindeabschnitt nicht überdrehen kann, da der Teller des Kopfes an dem Bauteil anschlägt, bevor ein mit einem Unterbau zu verschraubendes Bauteil völlig zum Aufliegen kommt und das Gewinde des unteren Gewindeabschnittes überdrehen könnte. Ein überdrehsicheres Setzen der Schraube ist so noch besser gewährleistet.

In einer weiteren Ausgestaltung der Verbindung mit der Schraube nach der Erfindung ist das Gewinde des unteren Gewindeabschnittes ein Blechschraubengewinde. Diese Ausgestaltung ist zweckmäßig, wenn es sich bei einem Unterbau, auf dem ein Bauteil zu befestigen ist, z. B. um Trapezblech handelt.

In einer weiteren Ausgestaltung der Verbindung mit der Schraube nach der Erfindung weisen die Gewindeaußendurchmesser des oberen und des unteren Gewindeabschnittes ein Verhältnis von 1,2 bis 1,4 auf. Das gewährleistet, dass die Schraube auch dann zuverlässig gesetzt und die erwünschte Abdichtung erzielt werden kann, wenn in einem zu befestigenden Bauteil statt einer Durchgangsbohrung, deren Durchmesser dem Außendurchmesser des unteren Gewindeabschnittes entspricht, nur ein durch den Bohrteil erzeugtes Kernloch vorhanden ist.

In einer weiteren Ausgestaltung der Verbindung mit der Schraube nach der Erfindung haben die Gewindeabschnitte Kerndurchmesser, die ein Verhältnis von 1,6 bis 1,8 und vorzugsweise von 1,8 aufweisen. Dadurch werden das Erzielen einer sicheren Befestigung eines Bauteils auf einem Unterbau und einer sicheren Abdichtung zwischen Schraube und Bauteil sowie zwischen Bauteil und Unterbau besonders erleichtert.

In einer Ausgestaltung der Verbindung nach der Erfindung entspricht die Komprimierung der Dichtung der Differenz der Gewindesteigungen der beiden Gewindeabschnitte multipliziert mit der Anzahl der Gewindegänge des Gewindes des oberen Gewindeabschnittes. Durch Wählen einer bestimmten Differenz lässt sich eine definierte Komprimierung der Dichtung auf einfache Weise gewährleisten.

In einer weiteren Ausgestaltung der Verbindung nach der Erfindung ist die Dichtung zwischen 20% und 80% komprimiert. Das gewährleistet eine zuverlässige Abdichtung zwischen Bauteil und Unterbau sowie um den Schraubenschaft zwischen dem Bauteil und dem Unterbau .

In einer weiteren Ausgestaltung der Verbindung nach der Erfindung entpricht der Durchmesser der Durchgangsbohrung des Bauteils mindestens dem Kerndurchmesser des Gewindes des unteren Gewindeabschnittes oder des oberen Gewindeabschnittes der Schraube. Durch Wahl des einen oder anderen Kerndurchmessers wird ein sicheres Einformen des Gewindes des oberen Gewindeabschnittes in das Material des Bauteils erzielt.

In einer weiteren Ausgestaltung der Verbindung nach der Erfindung ist der Gewindeaußendurchmesser des oberen Gewindeabschnittes mit dem Gewindeaußendurchmesser des unteren Gewindeabschnittes auf die Materialeigenschaften des Bauteils abgestimmt. Wenn mit dem Gewinde des unteren Gewindeabschnittes in einer Durchgangsbohrung ein Gewinde vorgeschnitten worden ist, muss das Gewinde des oberen Gewindeabschnittes anschließend in der Lage sein, dieses Gewinde zu überschneiden, um Material des Bauteils abdichtend um den oberen Gewindeabschnitt zu verdichten. Die Gewindeaußendurchmesser der beiden Gewindeabschnitte können beispielsweise unter Berücksichtigung der Härte des Materials des Bauteils aufeinander abgestimmt werden.

In einer weiteren Ausgestaltung der Verbindung nach der Erfindung ist die Gewindeform des oberen Gewindeabschnittes auf die Materialeigenschaften des Bauteils abgestimmt. Auch hier lässt sich beispielsweise eine Eigenschaft wie die Härte des Materials des Bauteils vorteilhaft berücksichtigen und ausnutzen.

In einer weiteren Ausgestaltung der Verbindung nach der Erfindung ist das Bauteil als ein glasfaserverstärktes Kunststoffteil ausgebildet. Die Glasfaserverstärkung sorgt dafür, dass die unterschiedlichen Ausbildungen des unteren und des oberen Gewindeabschnittes besonders vorteilhaft ausgenutzt werden können.

In einer weiteren Ausgestaltung der Verbindung nach der Erfindung ist die Dichtung an dem Bauteil an einer Auflagefläche zum Unterbau und um die Durchgangsbohrung angebracht. Dadurch wird eine zuverlässige Abdichtung zusätzlich gewährleistet.

In einer weiteren Ausgestaltung der Verbindung nach der Erfindung ist die Dichtung einerseits mit dem Bauteil und andererseits mit dem Unterbau abdichtend verbunden. Auf diese Weise wird eine vollkommene Abdichtung zwischen Bauteil und Unterbau noch sicherer gewährleistet.

In einer weiteren Ausgestaltung der Verbindung nach der Erfindung ist die Verbindung an einer Außenhülle an einem Gebäude eingesetzt. In dieser Ausgestaltung kann die Verbindung nach der Erfindung mit besonderem Vorteil eingesetzt werden, denn Verbindungen an einer Außenhülle sind üblicherweise schwierig zuverlässig abzudichten.

In einer weiteren Ausgestaltung der Verbindung nach der Erfindung ist die Verbindung an einem Dach eines Gebäudes eingesetzt. Für diese Ausgestaltung gilt das Gleiche wie für die zuvor beschriebene Ausgestaltung.

In einer weiteren Ausgestaltung der Verbindung nach der Erfindung sind der Kerndurchmesser, die Durchgangsbohrung im Bereich des oberen Gewindeabschnittes und die Gewindeform des oberen Gewindeabschnittes so ausgelegt, dass ein durch das Gewinde des oberen Gewindeabschnittes verdrängtes Volumen in den Bereich eines Volumens zwischen dem Kerndurchmesser des oberen Gewindeabschnittes und der Durchgangsbohrung gedrückt ist und damit abdichtet. Durch die Wahl der vorgenannten Parameter wird ein besonders sicheres Abdichten des oberen Gewindeabschnittes in dem Bauteil sicher und wiederholbar gewährleistet.

Ausführungsbeispiele der Erfindung werden im Folgenden unter Bezugnahme auf die Zeichnungen näher beschrieben. Es zeigen
- Fig. 1a - 1 c: eine erste Ausführungsform einer Schraube nach der Erfindung während unterschiedlicher Phasen des Herstellens einer ersten Ausführungsform einer erfindungsgemäßen Verbindung eines Bauteils mit einem Unterbau ,
- Fig. 2a - 2c: eine zweite Ausführungsform einer Schraube nach der Erfindung während unterschiedlicher Phasen des Herstellens einer zweiten Ausführungsform einer erfindungsgemäßen Verbindung eines Bauteils mit einem Unterbau,
- Fig. 3a - 3c: eine dritte Ausführungsform einer Schraube nach der Erfindung, während unterschiedlicher Phasen des Herstellens einer dritten Ausführungsform einer erfindungsgemäßen Verbindung eines Bauteils mit einem Unterbau und
- Fig. 4: in vergrößerter Darstellung eine Einzelheit der Verbindung nach Fig. 1 c.

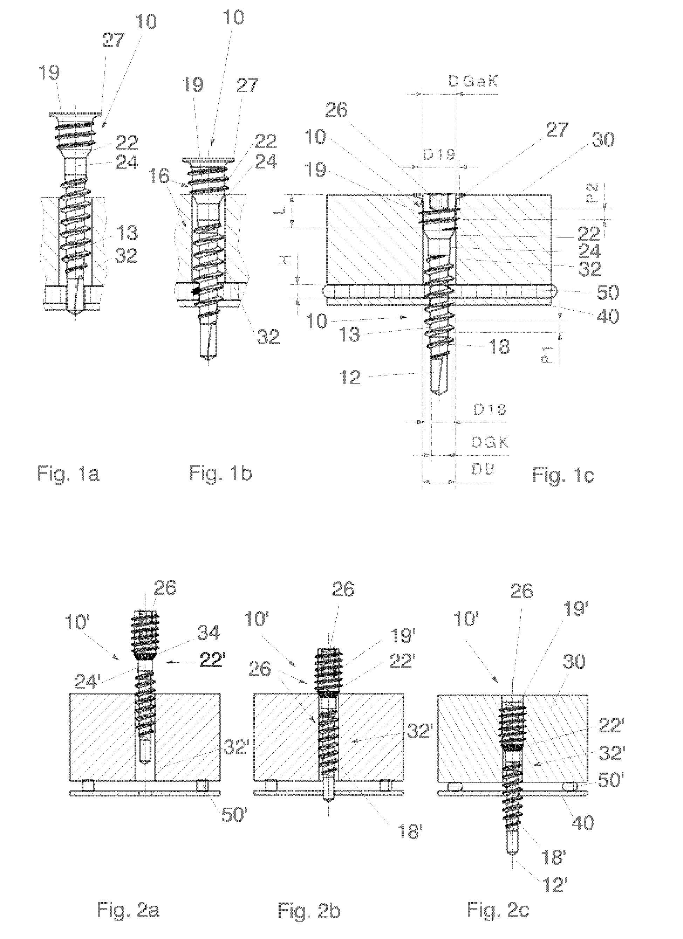

Die Fig. 1a - 1c zeigen eine erste Ausführungsform einer Schraube nach der Erfindung, die insgesamt mit 10 bezeichnet ist, in drei Phasen des Herstellens einer ersten Ausführungsform einer erfindungsgemäßen Verbindung eines Bauteils 30 mit einem Unterbau 40. Die Schraube 10 dient zum Befestigen des Bauteils 30 auf dem Unterbau 40. Bei dem Bauteil 30 kann es sich um ein Kunststoffteil handeln, welches ein Bestandteil eines Photovoltaikelements ist, das auf einem Dach zu befestigen ist, welches hier durch den Unterbau 40 repräsentiert wird. Das Bauteil 30 ist bei den hier beschriebenen Ausführungsbeispielen ein glasfaserverstärktes Kunststoffteil.

Bei dem Unterbau 40 kann es sich um ein dünnes Blech handeln, z. B. um ein Trapezblech. Auf den Unterbau 40 ist eine Dichtung 50 aufgeklebt. Die Dichtung 50 soll bei dem Anziehen der Schraube 10 auf eine Dicke H definiert komprimiert werden, um eine Abdichtung zwischen dem Bauteil 30 und den Unterbau 40 zu gewährleisten. Zusätzlich soll die Schraube 10 in dem Bauteil 30 abgedichtet werden, was im Folgenden näher beschrieben ist. Ferner soll das Setzen der Schraube 10 überdrehsicher erfolgen, was im Folgenden ebenfalls näher beschrieben ist.

Schließlich kann die erfindungsgemäße Verbindung mit der erfindungsgemäßen Schraube 10 (oder 10', 10") durch eine Kombination aus einer Abdichtung ohne Dichtmittel oder Dichtscheibe zwischen der Schraube 10 (oder 10', 10") und dem Bauteil 30 und einer definierten Komprimierung der Dichtung hergestellt ist, was im Folgenden ebenfalls näher beschrieben ist.

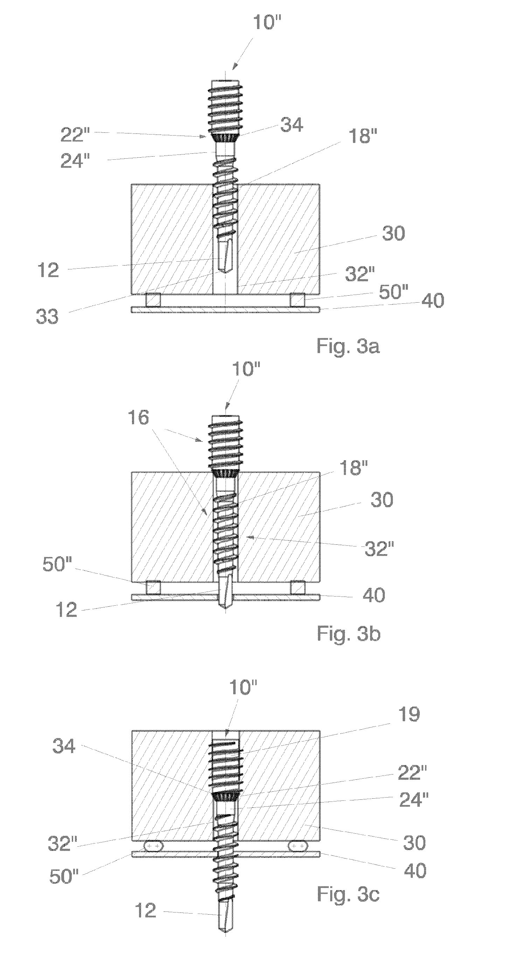

Das Bauteil 30 hat eine Durchgangsbohrung 32 mit einem Durchmesser D_{B}. Gemäß der Darstellung in den Fig. 1a - 1c und 3a - 3c hat die Schraube 10 einen Schaft 13 mit einem gewindeschneidenden oder -furchenden Gewinde 16 und einer als ein Bohrteil ausgebildeten Spitze 12. Statt als Bohrteil kann die Spitze 12 als eine Eindringspitze 12' ausgebildet sein, die in den Fig. 2a - 2c gezeigt ist, auf die weiter unten näher eingegangen wird. Das Gewinde 16 umfasst einen der Spitze 12 benachbarten unteren Gewindeabschnitt 18 und einen zu der Spitze 12 entgegengesetzten oberen Gewindeabschnitt 19. Das Gewinde des unteren Gewindeabschnittes 18 ist ein Blechschraubengewinde. Der untere Gewindeabschnitt 18 hat einen Kerndurchmesser D_{GK}. Der obere Gewindeabschnitt 19 hat einen Kerndurchmesser D_{GaK} und eine Länge L. Der untere Gewindeabschnitt 18 hat einen Gewindeaußendurchmesser D₁₈. Der obere Gewindeabschnitt 19 hat einen Gewindeaußendurchmesser D₁₉, der größer ist als der Gewindeaußendurchmesser D₁₈. Zwischen den beiden Gewindeabschnitten 18, 19 befindet sich ein Übergangsabschnitt 22 mit einem sich allmählich verändernden Durchmesser, der hier als ein konisch zulaufender Schaftabschnitt ausgebildet ist. Der hier konisch zulaufende Übergangsabschnitt 22 kann eine gewindefreier Schaftabschnitt sein, wie es in den Fig. 1 a und 1 c dargestellt ist. Stattdessen kann der hier konisch zulaufende Übergangsabschnitt 22 mit einem Gewindeanfang des oberen Gewindeabschnittes 19 ausgebildet sein, wie es bei der zweiten Ausführungsform der Schraube nach der Erfindung der Fall ist, die in den Fig. 2a - 2c gezeigt ist.

Der Übergangsabschnitt 22, 22', 22" braucht nicht konisch zulaufend ausgebildet zu sein. Es genügt, dass der Übergangsabschnitt 22, 22', 22" durch eine Abfasung eines der Spitze 12, 12' zugewandten zylindrischen Teils des oberen Gewindeabschnittes 19, 19', 19" gebildet ist. Eine solche Abfasung, unter der man das Brechen einer Kante versteht, kann durch einen Radius oder eine Facette gebildet sein.

Bei der Schraube 10 ist darüber hinaus ein sich an den Übergangsabschnitt 22 in Richtung der Spitze 12 anschließender Teilabschnitt des Schaftes 13 als ein gewindefreier Schaftabschnitt 24 ausgebildet. Der obere Gewindeabschnitt 19 hat eine Gewindesteigung P₂, die kleiner ist als eine Gewindesteigung P₁ des unteren Gewindeabschnitts 18. Die Gewindesteigung P₁ des unteren Gewindeabschnittes 18 steht in einem Verhältnis von 1,1 bis 1,5 zu der Gewindesteigung P₂ des oberen Gewindeabschnittes.

Die Komprimierung der Dichtung 50, 50' entspricht der Differenz der Gewindesteigungen der beiden Gewindeabschnitte 18, 19; 18', 19' multipliziert mit der Anzahl der Gewindegänge des Gewindes des oberen Gewindeabschnittes 19, 19'. Zweckmäßig wird die Dichtung 50, 50' zwischen 20% und 80% komprimiert.

Gemäß der Darstellung in den Fig. 2a - 2c und 3a - 3c sind an dem auch hier konisch zulaufenden Übergangsabschnitt 22', 22" Elemente 34 vorhanden zum Aufweiten einer Durchgangsbohrung 32', 32" und/oder Erwärmen eines die Durchgangsbohrung 32', 32" umgebenden Werkstoffes. Die Elemente 34 können z. B. als Fräsrippen ausgebildet sein.

Der Durchmesser der Durchgangsbohrung 32, 32', 32" sollte in einem Bereich zwischen dem Kerndurchmesser D_{GK} des unteren Gewindeabschnitts 18, 18', 18" und dem Kerndurchmesser D_{GaK} des oberen Gewindeabschnitts 19, 19', 19" liegen. Der Durchmesser D_{B} der Durchgangsbohrung 32, 32', 32" kann gleich dem Gewindeaußendurchmesser D₁₈ des unteren Gewindeabschnittes 18, 18', 18" sein. Insbesondere dann, wenn die Schraube wie in den Fig. 2a - 2c als Spitze nicht ein Bohrteil, sondern eine Eindringspitze 12' hat, sollte der Durchmesser der Durchgangsbohrung 32' etwas kleiner sein als der Gewindeaußendurchmesser D₁₈ des unteren Gewindeabschnittes 18', um einen festen Sitz des oberen Gewindeabschnittes 19' in dem Bauteil 30 zu gewährleisten. Das Eindringen des oberen Gewindeabschnittes 19' in die Durchgangsbohrung 32' wird in diesem Fall durch die Elemente 34 erleichtert, die in dem Übergangsabschnitt 22' vorhanden sind.

Die gleichen Gesichtspunkte gelten für die in den Fig. 3a - 3c dargestellte dritte Ausführungsform der Schraube 10" und der Verbindung nach der Erfindung . Solange das Gewinde des unteren Gewindeabschnittes 18', 18" mit dem Unterbau 40 noch nicht in Eingriff ist, könnte auch hier der Vortrieb der Schraube 10" durch den Eingriff des Gewindes des unteren Gewindeabschnittes 18" in dem Bereich der Durchgangsbohrung 32" in das Material des Bauteils 30 (nicht dargestellt) unterstützt werden.

Die Ausführungsformen nach den Fig. 2a - 2c und 3a - 3c unterscheiden sich von der Ausführungsform nach den Fig. 1a - 1c zusätzlich dadurch, dass die Dichtung 50 nicht als ein durchgehender Belag oder eine durchgehende Platte oder Scheibe ausgebildet ist, sondern als eine ringförmige Dichtung 50' bzw. 50".

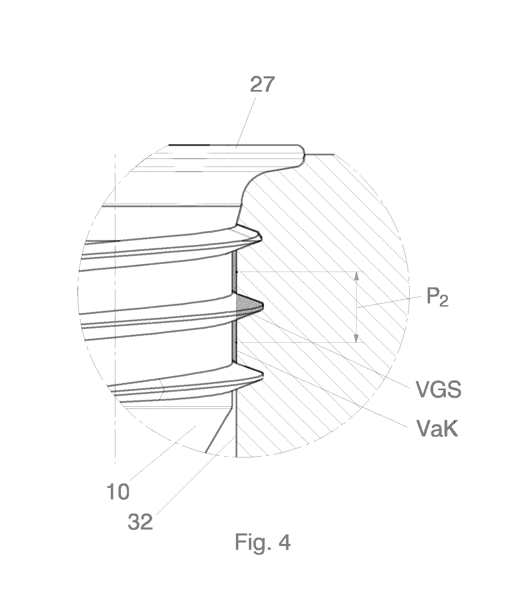

Der Schaft 13 ist an einem zu der Spitze 12 entgegengesetzten Ende mit einem Kopf versehen, der hier ein verdickter Schaftabschnitt ist, welcher mit dem oberen Gewindeabschnitt 19, 19' oder 19" versehen ist. Der Kopf ist mit einem Werkzeugangriff 26 versehen, der zwar als ein Innenwerkzeugangriff gezeigt ist, stattdessen jedoch ein Außenwerkzeugangriff sein könnte. Bei der in den Fig. 1a - 1c und 4 gezeigten ersten Ausführungsform der Schraube 10 nach der Erfindung ist der Kopf mit einem flachen Teller 27 ausgebildet. Der Teller 27 hat einen Außendurchmesser, der größer ist als der Gewindeaußendurchmeser D₁₉ des oberen Gewindeabschnittes 19.

Die Gewindeaußendurchmesser D₁₉ und D₁₈ des oberen bzw. unteren Gewindeabschnittes 19, 19', 19" bzw. 18, 18', 18" weisen ein Verhältnis von 1,2 bis 1,4 auf. Der obere und der untere Gewindeabschnitt 19 bzw. 18 haben Kerndurchmesser D_{GaK} bzw. D_{GK}, die ein Verhältnis von 1,6 bis 1,8 und vorzugsweise von 1,8 aufweisen.

Wenn das zu befestigende Bauteil 30 mit einer Durchgangsbohrung 32 versehen ist, wie es bei der in den Fig. 1a - 1c gezeigten ersten Ausführungsform der Schraube 10 nach der Erfindung der Fall ist, so entspricht, wie oben dargelegt, der Bohrungsdurchmesser D_{B} des Bauteils 30 mindestens dem Kerndurchmesser D_{GaK} des oberen Gewindeabschnittes 19 oder mindestens dem Kerndurchmesser D_{GK} des Gewindes des unteren Gewindeabschnittes 18, 18' der Schraube 10, 10'. Der Gewindeaußendurchmesser D₁₉ des oberen Gewindeabschnittes 19, 19' ist mit dem Gewindeaußendurchmesser D₁₈ des unteren Gewindeabschnittes 18, 18' auf die Materialeigenschaften des Bauteils 30 abgestimmt. Die Schraube 10 soll sich so weit in das Bauteil 30 einschrauben lassen, bis sie mit dem flachen Teller 27 auf dem Bauteil 30 aufliegt und so einen Anschlag hat, der ein Überdrehen der Schraube verhindert. Ebenso ist die Gewindeform des Gewindes des oberen Gewindeabschnittes 19, 19' auf die Materialeigenschaften des Bauteils 30 abgestimmt.

Die Fig. 2a - 2c zeigen eine zweite Ausführungsform der Schraube nach der Erfindung, die insgesamt mit 10' bezeichnet ist, und eine zweite Ausführungsform der Verbindung nach der Erfindung . Die Schraube 10' hat eine Spitze 12', die als eine Eindringspitze ausgebildet ist. Weiter hat sie einen unteren Gewindeabschnitt 18', der unmittelbar, also ohne einen zwischengeschalteten gewindefreien Schaftabschnitt in einen hier konisch zulaufenden Übergangsabschnitt 22' übergeht, der mit einem Gewindeanfang eines oberen Gewindeabschnittes 19' ausgebildet ist. Zwischen dem Bauteil 30 und dem Unterbau 40 befindet sich die Dichtung 50', die ringförmig sein oder aus einem oder mehreren elastischen Dichtelementen bestehen kann, welche nach dem Setzen der Schraube definiert komprimiert sind. Das zeigt Fig. 2c, in welcher der Setzzustand der Schraube 10' dargestellt ist.

Bei der in den Figuren 2a - 2c dargestellten Ausführungsform hat das Bauteil 30, wie bereits erwähnt, die Durchgangsbohrung 32', von der wenigstens der in der Zeichnung untere Teil dem Außendurchmesser des unteren Gewindeabschnittes 18' angepasst ist. Der in der Zeichnung obere Teil der Durchgangsbohrung 32' könnte im Durchmesser etwas größer bemessen sein als der untere Teil. Das erlaubt, die Schraube so weit einzudrehen, bis sie in dem Bauteil 30 bündig versenkt ist, wie es in Fig. 2c gezeigt ist. Die Stufe an dem Übergang zwischen dem unteren Bohrungsteil und dem oberen Bohrungsteil würde dabei einen Anschlag für den Kopf oder Teil größeren Durchmessers der Schraube 10' mit dem oberen Gewindeabschnitt 19' bilden, um ein Überdrehen der Schraube 10' während des Setzens zu verhindern. Ferner würde dann der untere Bohrungsteil der Durchgangsbohrung 32' die Zentrierung der Schraube 10 übernehmen.

Die Durchgangsbohrung 32, 32" nach den Fig. 1a - 1c oder 3a - 3c muss nicht unbedingt von vornherein in dem Bauteil 30 vorhanden sein, wenn die Schraube 10 oder 10" gesetzt werden soll. Den gleichen Zweck wie die Durchgangsbohrung 32' oder 32" könnte auch einKernloch erfüllen, das mit dem Durchmesser D_{GK} durch den Bohrteil 12 hergestellt wird, einschließlich eines Innengewindes, welches durch den unteren Gewindeabschnitt 18 bzw. 18' hergestellt wird. In diesem Fall sollte der untere Gewindeabschnitt 18 bzw. 18' der Schraube 10, 10" nur mit dem Unterbau 40 in Eingriff sein, wenn der obere Gewindeabschnitt 19 der Schraube 10', 10" mit dem Bauteil 30 in Eingriff ist. Das ließe sich dadurch erreichen, dass die Länge des gewindelosen Schaftabschnittes 24, 24" so bemessen wird, dass dieser nach unten hin gerade bis zu der oberen Fläche des Unterbaus 40 reicht, wenn die Schraube 10, 10" gesetzt ist. In diesem Fall wäre in gesetztem Zustand der Schraube 10', 10" der obere Schaftabschnitt 19, 19" mit dem Bauteil 30 in Eingriff, während sich unterhalb davon der gewindefreie Schaftabschnitt 24, 24" bis dorthin erstreckt, wo, von oben her betrachtet, der Unterbau 40 beginnt. Mit dem Bauteil 30 ist bei gesetzter Schraube 10" dann nur der obere Gewindeabschnitt 19 in Eingriff. Die Schraube 10"könnte also in einem Bauteil 30 gesetzt werden, in welchem von vornherein keine Durchgangsbohrung 32, 32" vorhanden ist.

Fig. 4 zeigt in vergrößerter Darstellung eine Einzelheit der in den Fig. 1a - 1 c dargestellten Schraube 10 im Bereich des oberen Gewindeabschnittes 19. Die vergrößert dargestellte Einzelheit veranschaulicht, dass der Kerndurchmesser D_{GaK} die Durchgangsbohrung 32 im Bereich des oberen Gewindeabschnittes 19 und die Gewindeform des oberen Gewindeabschnittes 19 so ausgelegt sind, dass ein durch das Gewinde des oberen Gewindeabschnittes 19 verdrängtes Volumen V_{GS} in den Bereich eines Volumens V_{aK} zwischen dem Kerndurchmesser D_{GaK} des oberen Gewindeabschnittes 19 und der Durchgangsbohrung 32 gedrückt ist und damit abdichtet.

### Bezugszeichenliste

- 10, 10', 10": Schraube
- 12, 12': Spitze
- 13: Schaft
- 16: Gewinde
- 18, 18', 18": unterer Gewindeabschnitt
- 19, 19', 19": oberer Gewindeabschnitt
- 22, 22', 22": Übergangsabschnitt
- 24, 24', 24": gewindefreier Schaftabschnitt
- 26: Werkzeugangriff
- 27: flacher Teller
- 30: Bauteil
- 32, 32', 32": Durchgangsbohrung
- 34: Elemente
- 40: Unterbau
- 50, 50', 50": Dichtung

- D_{B}: Durchmesser
- D_{GK}: Kerndurchmesser
- D_{GaK}: Kerndurchmesser
- D₁₈: Gewindeaußendurchmesser
- D₁₉: Gewindeaußendurchmesser
- P₁, P₂: Gewindesteigung
- L: Länge oberer Gewindeabschnitt
- H: komprimierte Dicke

## Patentansprüche

1. Verbindung eines Unterbaus (40) durch eine Schraube mit einem Bauteil (30) mit einer Durchgangsbohrung (32, 32') und mit einer zwischen dem Unterbau (40) und dem Bauteil (30) liegenden Dichtung (50, 50'),
wobei die Verbindung mit einer Schraube (10, 10', 10") mit einem Schaft (13) mit einem gewindeschneidenden oder -furchenden Gewinde (16) und mit einer Spitze (12, 12') hergestellt ist,
wobei die Spitze (12, 12') als ein Bohrteil und/oder als eine Eindringspitze ausgebildet ist,
mit einem der Spitze (12, 12') benachbarten unteren Gewindeabschnitt (18, 18') mit einem ersten Gewindeaußendurchmesser (D₁₈),
mit einem zu der Spitze (12, 12') entgegengesetzten oberen Gewindeabschnitt (19, 19') mit einem zweiten, größeren Gewindeaußendurchmesser (D₁₉) und
mit einem Übergangsabschnitt (22, 22', 22") mit einem sich allmählich verändernden Durchmesser zwischen den beiden Gewindeabschnitten (18, 19; 18', 19'),
wobei der obere Gewindeabschnitt (19, 19') eine Gewindesteigung (P₂) aufweist, die kleiner ist als die Gewindesteigung (P₁) des unteren Gewindeabschnitts (18, 18'),
**dadurch gekennzeichnet, dass**
der Unterbau aus einem dünnen Blech gebildet ist,
dass das Bauteil aus Kunststoff hergestellt ist,
dass die Verbindung hergestellt ist als eine dichte Verbindung durch eine Kombination aus einer Abdichtung durch definierte Komprimierung der Dichtung (50, 60) und einer Abdichtung durch Formschluss zwischen dem oberen Gewindeabschnitt (19, 19', 19") der Schraube (10, 10', 10") und dem Bauteil (30) und einem Verdichten des Materials des Bauteils (30) um den oberen Gewindeabschnitt (19, 19', 19").

2. Verbindung nach Anspruch 1, **dadurch gekennzeichnet, dass** die Komprimierung der Dichtung (50, 50') der Differenz der Gewindesteigungen der beiden Gewindeabschnitte (18, 19; 18', 19') multipliziert mit der Anzahl der Gewindegänge des Gewindes des oberen Gewindeabschnittes (19, 19') entspricht.

3. Verbindung nach einem der vorhergehenden Ansprüche, **dadurch gekennzeichnet, dass** der Durchmesser (D_{B}) der Durchgangsbohrung (32) des Bauteils (30) mindestens dem Kerndurchmesser (D_{GK}, D_{GaK}) des Gewindes des unteren Gewindeabschnittes (18, 18', 18") oder des oberen Gewindeabschnittes (19, 19', 19") der Schraube (10, 10', 10") entspricht.

4. Verbindung nach einem der vorhergehenden Ansprüche, **dadurch gekennzeichnet, dass** der Gewindeaußendurchmesser (D₁₉) des oberen Gewindeabschnittes (19, 19') mit dem Gewindeaußendurchmesser (D₁₈) des unteren Gewindeabschnittes (18, 18', 18") auf die Materialeigenschaften des Bauteils (30) abgestimmt ist.

5. Verbindung nach einem der vorhergehenden Ansprüche, **dadurch gekennzeichnet, dass** das Bauteil (30) als ein glasfaserverstärktes Kunststoffteil ausgebildet ist.

6. Verbindung nach einem der vorhergehenden Ansprüche, **dadurch gekennzeichnet, dass** die Dichtung (50, 50') an dem Bauteil (30) an einer Auflagefläche zum Unterbau (40) und um die Durchgangsbohrung (32, 32') angebracht ist.

7. Verbindung nach einem der vorhergehenden Ansprüche, **dadurch gekennzeichnet, dass** die Dichtung (50, 50') einerseits mit dem Bauteil (30) und andererseits mit dem Unterbau (40) abdichtend verbunden ist.

8. Verbindung nach einem der vorhergehenden Ansprüche, **dadurch gekennzeichnet, dass** der Kerndurchmesser (D_{GaK}), die Durchgangsbohrung (32) im Bereich des oberen Gewindeabschnittes (19) und die Gewindeform des oberen Gewindeabschnittes (19) so ausgelegt sind, dass ein durch das Gewinde des oberen Gewindeabschnittes (19) verdrängtes Volumen (V_{GS}) in den Bereich eines Volumens (V_{aK}) zwischen dem Kerndurchmesser (D_{GaK}) des oberen Gewindeabschnittes (19) und der Durchgangsbohrung (32) gedrückt ist und damit abdichtet.

9. Verbindung nach einem der vorhergehenden Ansprüche, **dadurch gekennzeichnet, dass** der Übergangsabschnitt (22') mit einem Gewindeanfang des oberen Gewindeabschnittes (19') ausgebildet ist.

10. Verbindung nach einem der vorhergehenden Ansprüche, **dadurch gekennzeichnet, dass** der Übergangsabschnitt (22) gewindefrei ausgebildet ist.

11. Verbindung nach einem der vorhergehenden Ansprüche, **dadurch gekennzeichnet, dass** ein sich an den Übergangsabschnitt (22, 22") in Richtung der Spitze (12) anschließender Teil des Schaftes (13) als ein gewindefreier Schaftabschnitt (24, 24") ausgebildet ist.

12. Verbindung nach einem der vorhergehenden Ansprüche, **dadurch gekennzeichnet, dass** an dem Übergangsabschnitt (22") Elemente (34) zum Aufweiten eines mit der Spitze (12) gebohrten Kernloches (33) und/oder Erwärmen eines das Kernloch (33) umgebenden Werkstoffes vorhanden sind.

13. Verbindung nach einem der vorhergehenden Ansprüche, **dadurch gekennzeichnet, dass** der Schaft (13) an einem zu der Spitze (12) entgegengesetzten Ende mit einem Kopf und/oder einem Werkzeugangriff (26) versehen ist.

14. Verbindung nach Anspruch 13, **dadurch gekennzeichnet, dass** der Kopf mit einem flachen Teller (27) ausgebildet ist.

15. Verbindung nach einem der vorhergehenden Ansprüche, **dadurch gekennzeichnet, dass** das Gewinde des unteren Gewindeabschnittes (18) ein Blechschraubengewinde ist.

16. Verbindung nach einem der vorhergehenden Ansprüche, **dadurch gekennzeichnet, dass** der Übergangsabschnitt (22, 22', 22") ein konisch zulaufender Schaftabschnitt ist.

17. Verbindung nach einem der Ansprüche 1 bis 15, **dadurch gekennzeichnet, dass** der Übergangsabschnitt (22, 22', 22") durch eine Abfasung eines der Spitze (12, 12') zugewandten zylindrischen Teils des oberen Gewindeabschnittes (19, 19') gebildet ist.

## Claims

1. A connection of a substructure (40) by a screw to a component (30) having a through bore (32, 32') and having a seal (50, 50') that lies between the substructure (40) and the component (30),
wherein the connection is made by a screw (10, 10', 10") having a shank (13) having a thread-cutting or thread-tapping thread (16) and having a tip (12, 12'),
wherein the tip (12, 12') takes the form of a drilling part and/or of a penetrating tip, having a lower thread portion (18, 18') which is adjacent to the tip (12, 12') and has a first thread external diameter (D₁₈),
having an upper thread portion (19, 19') which is at the opposite end to the tip (12, 12') and has a second, larger thread external diameter (D₁₉), and
having a transition portion (22, 22', 22") of gradually changing diameter between the two thread portions (18, 19; 18', 19'),
wherein the upper thread portion (19, 19') has a thread pitch (P₂) which is smaller than the thread pitch (P₁) of the lower thread portion (18, 18'),
**characterised**
**in that** the substructure is formed by a thin metal sheet,
**in that** the component is made of plastics material,
**in that** the connection is made in the form of a leak-tight connection by a combination of: sealing by compressing the seal (50, 60) in defined manner, and sealing by a form fit between the upper thread portion (19, 19', 19") of the screw (10, 10', 10") and the component (30), and compacting the material of the component (30) around the upper thread portion (19, 19', 19").

2. A connection according to Claim 1, **characterised in that** the compressing of the seal (50, 50') corresponds to the difference in the thread pitches of the two thread portions (18, 19; 18', 19') multiplied by the number of thread turns of the thread of the upper thread portion (19, 19').

3. A connection according to one of the preceding claims, **characterised in that** the diameter (D_{B}) of the through bore (32) of the component (30) corresponds at least to the core diameter (D_{GK}, D_{GaK}) of the thread of the lower thread portion (18, 18', 18") or the upper thread portion (19, 19', 19") of the screw (10, 10', 10").

4. A connection according to one of the preceding claims, **characterised in that** the thread external diameter (D₁₉) of the upper thread portion (19, 19') is matched, with the thread external diameter (D₁₈) of the lower thread portion (18, 18', 18"), to the material properties of the component (30).

5. A connection according to one of the preceding claims, **characterised in that** the component (30) takes the form of a glass fibre reinforced plastics part.

6. A connection according to one of the preceding claims, **characterised in that** the seal (50, 50') is mounted on the component (30) at a surface for support against the substructure (40) and around the through bore (32, 32').

7. A connection according to one of the preceding claims, **characterised in that** the seal (50, 50') is sealingly connected on the one hand to the component (30) and on the other to the substructure (40).

8. A connection according to one of the preceding claims, **characterised in that** the core diameter (D_{GaK}), the through bore (32) in the region of the upper thread portion (19) and the thread shape of the upper thread portion (19) are such that a volume (V_{GS}) that is displaced by the thread of the upper thread portion (19) is pressed into the region of a volume (V_{aK}) between the core diameter (D_{GaK}) of the upper thread portion (19) and the through bore (32) and is hence sealed.

9. A connection according to one of the preceding claims, **characterised in that** the transition portion (22') takes the form of a thread start of the thread portion (19').

10. A connection according to one of the preceding claims, **characterised in that** the transition portion (22) takes a threadless form.

11. A connection according to one of the preceding claims, **characterised in that** a part of the shank (13) that adjoins the transition portion (22, 22") in the direction of the tip (12) takes the form of a threadless shank portion (24, 24").

12. A connection according to one of the preceding claims, **characterised in that** elements (34) for widening a core hole (33) that has been bored by the tip (12) and/or for warming a material surrounding the core hole (33) are provided at the transition portion (22").

13. A connection according to one of the preceding claims, **characterised in that** the shank (13) is provided, at an opposite end to that having the tip (12), with a head and/or a means (26) for applying a tool.

14. A connection according to Claim 13, **characterised in that** the head takes the form of a flat plate (27).

15. A connection according to one of the preceding claims, **characterised in that** the thread of the lower thread portion (18) is a sheet-metal screw thread.

16. A connection according to one of the preceding claims, **characterised in that** the transition portion (22, 22', 22") is a conically tapering shank portion.

17. A connection according to one of Claims 1 to 15, **characterised in that** the transition portion (22, 22', 22") is formed by chamfering away a cylindrical part of the upper thread portion (19, 19') which faces the tip (12, 12').

## Revendications

1. Système d'assemblage au moyen d'une vis d'une substructure (40) et d'un composant (30) comprenant un perçage traversant (32, 32') ainsi qu'une garniture d'étanchéité (50, 50') située entre la substructure (40) et le composant (30), l'assemblage étant obtenu au moyen d'une vis (10, 10', 10") comprenant une tige (13) équipée d'un filetage (16) taraudeur ou rainureur et d'une pointe (12, 12'), la pointe (12, 12') étant réalisée sous la forme d'un élément perceur et/ou sous la forme d'une pointe de pénétration,
cette vis comprenant un segment fileté inférieur (18, 18') situé au voisinage de la pointe (12, 12') et ayant un premier diamètre externe de filetage (D₁₈),
un segment fileté supérieur (19, 19') situé à l'opposé de la pointe (12, 12') et ayant un second diamètre externe de filetage (D₁₉) supérieur au premier diamètre de filetage, et
un segment de transition (22, 22', 22") ayant un diamètre variant progressivement entre les deux segments filetés (18, 19, 18', 19'), le segment fileté supérieur (19, 19') ayant un pas de filetage (P₂) qui est inférieur au pas de filetage (P₁) du segment fileté inférieur (18, 18'), **caractérisé en ce que**
la substructure est formée par une tôle mince,
le composant est réalisé en matériau synthétique,
l'assemblage est réalisé sous la forme d'un assemblage étanche obtenu par une combinaison d'un étanchement par compression définie de la garniture d'étanchéité (50, 60) et d'un étanchement par liaison par la forme du segment fileté supérieur (19, 19', 19") de la vis (10, 10', 10") et du composant (30) et compression du matériau du composant (30) autour du segment fileté supérieur (19, 19', 19").

2. Système d'assemblage conforme à la revendication 1, **caractérisé en ce que** la compression de la garniture d'étanchéité (50, 50') correspond à la différence des pas de filetage des deux segments filetés (18, 19, 18', 19') multipliée par le nombre de spires du filetage du segment fileté supérieur (19, 19').

3. Système d'assemblage conforme à l'une des revendications précédentes, **caractérisé en ce que** le diamètre (D_{B}) du perçage traversant (32) du composant (30) correspond au moins au diamètre de l'âme (D_{GK}, D_{GaK}) du filetage du segment fileté inférieur (18, 18', 18") ou du segment fileté supérieur (19, 19', 19") de la vis (10, 10', 10").

4. Système d'assemblage conforme à l'une des revendications précédentes, **caractérisé en ce que** le diamètre extérieur (D₁₉) du filetage du segment fileté supérieur (19, 19') est adapté, avec le diamètre externe (D₁₈) du filetage du segment fileté inférieur (18, 18', 18") aux caractéristiques du matériau du composant (30).

5. Système d'assemblage conforme à l'une des revendications précédentes, **caractérisé en ce que** le composant (30) est réalisé sous la forme d'un élément en matériau synthétique renforcé par des fibres de verre.

6. Système d'assemblage conforme à l'une des revendications précédentes, **caractérisé en ce que** la garniture d'étanchéité (50, 50') est mise en place sur une surface d'appui du composant (30) sur la substructure (40) et autour du perçage traversant (32, 32').

7. Système d'assemblage conforme à l'une des revendications précédentes, **caractérisé en ce que** la garniture d'étanchéité (50, 50') est reliée hermétiquement d'une part au composant (30) et d'autre part à la substructure (40).

8. Système d'assemblage conforme à l'une des revendications précédentes, **caractérisé en ce que** le diamètre de l'âme (D_{GaK}), le perçage traversant (32) dans la zone du segment fileté supérieur (19) et la forme du filetage du segment fileté supérieur (19) sont conçus de sorte que le volume (V_{GS}) déplacé par le filetage du segment fileté supérieur (18) soit poussé et ainsi étanché dans la zone du volume (V_{aK}) situé entre le diamètre (D_{GaK}) de l'âme du segment fileté supérieur (19) et le perçage traversant (32).

9. Système d'assemblage conforme à l'une des revendications précédentes, **caractérisé en ce que** le segment de transition (22') est réalisé avec le début du filetage du segment fileté supérieur (19').

10. Système d'assemblage conforme à l'une des revendications précédentes, **caractérisé en ce que** le segment de transition (22) est réalisé sans filetage.

11. Système d'assemblage conforme à l'une des revendications précédentes, **caractérisé en ce qu'**une partie de la tige (13) se connectant au segment de transition (22, 22") dans la direction de la pointe (12) est réalisée sous la forme d'un segment de tige sans filetage (24, 24").

12. Système d'assemblage conforme à l'une des revendications précédentes, **caractérisé en ce qu'**il est prévu sur le segment de transition (22") des éléments (34) permettant d'élargir un avant-trou (33) percé avec la pointe (12) et/ou de chauffer le matériau entourant l'avant-trou (33).

13. Système d'assemblage conforme à l'une des revendications précédentes, **caractérisé en ce que** la tige (13) est équipée, à son extrémité opposée à la pointe (12) d'une tête et/ou d'un élément (26) permettant la mise en prise d'un outil.

14. Système d'assemblage conforme à la revendication 13, **caractérisé en ce que** la tête est formée par un disque plan (27).

15. Système d'assemblage conforme à l'une des revendications précédentes, **caractérisé en ce que** le filetage du segment fileté inférieur (18) est un filetage de vis à tôle.

16. Système d'assemblage conforme à l'une des revendications précédentes, **caractérisé en ce que** le segment de transition (22, 22', 22") est un segment de tige s'étendant coniquement.

17. Système d'assemblage conforme à l'une des revendications 1 à 15, **caractérisé en ce que** le segment de transition (22, 22', 22") est formé par un chanfrein d'une partie cylindrique du segment fileté supérieur (19, 19') tourné vers la pointe (12, 12').
